# EUROPEAN PATENT APPLICATION

(11) **EP 1 376 317 A2**
(43) Date of publication of application: **02.01.2004**
(21) Application number: 03013386.2
(22) Date of filing: 18.06.2003
(51) Int. Cl.: G06F 3/00

(54) **Image/tactile information input device, image/tactile information input method, and image/tactile information input program**

(30) Priority: 19.06.2002 JP 2002178626
(71) Applicant: SEIKO EPSON CORPORATION, Shinjuku-ku, Tokyo 163-0811 (JP)
(72) Inventor: Kitabayashi, Ikuaki, Suwa-shi, Nagano-ken 392-8502 (JP)
(74) Representative: Hoffmann, Eckart, Dipl.-Ing.

(57) **Abstract**

Described are a device and a method for inputting image/tactile information capable of associating image information and tactile information of an object with each other and obtaining it accurately. The image/tactile information input device (1) includes a camera (2) imaging and capturing object image information as an electronic image, and a tactile glove (3) for touching at least part of the object to capture tactile information that is the sense of touch. The camera (2) produces associating information for associating the image information with the tactile information so that the image position of a particular part of the imaged object and the tactile sense at the position correspond to each other, and generates image information with tactile information including the image information, the tactile information, and the associating information.

## Description

The present invention relates to an image/tactile information input device, an image/tactile information input method, and an image/tactile information input program.

For example, Japanese Patent No. 2933023 discloses a device for inputting image information, obtaining tactile information corresponding to the image from the image information, and outputting it.

The above-mentioned device, however, has a disadvantage that accurate tactile information cannot be obtained, since the tactile information is obtained from the image information.

An object of the present invention is to provide an image/tactile information input device, an image/tactile information input method, and an image/tactile information input program, which can associate image information and tactile information of an object with each other, and obtain them accurately.

The object is achieved by the device as claimed in claim 1, the method as claimed in claim 13 and a program as claimed in claim 14.

An image/tactile information input device, an image/tactile information input method, and an image/tactile information input program according to the present invention will be specifically described below with reference to a preferred embodiment shown in the attached drawings.
- Fig. 1: is a perspective view showing an image/tactile information input device according to an embodiment of the present invention.
- Fig. 2: is a perspective view showing an example of the components of a camera of the image/tactile information input device shown in Fig. 1.
- Fig. 3: is a block diagram showing an example of the circuitry of the camera of the image/tactile information input device shown in Fig. 1.
- Fig. 4: is a perspective view showing an example of the components of a tactile glove of the image/tactile information input device shown in Fig. 1.
- Fig. 5: is a block diagram showing an example of the circuitry of the tactile glove of the image/tactile information input device shown in Fig. 1.
- Fig. 6: is a schematic diagram showing the palm side of the tactile glove of the image/tactile information input device shown in Fig. 1.
- Fig. 7: is a schematic diagram of sensors and their periphery of the tactile glove of the image/tactile information input device shown in Fig. 1.
- Fig. 8: is a flowchart showing an example of the operation of the image/tactile information input device shown in Fig. 1 when image information and tactile information are captured.

An image/tactile information input device 1 shown in the drawings captures image information (image data) of an object and tactile information (tactile data) of at least one part of the object, and generates image information with tactile information (image data with tactile data) including the image information, the tactile information, and associating information (associating data) for associating the image information and the tactile information with each other.

The associating information is an information (positional information) for associating the image information and the tactile information with each other, so that the image position of a particular part of the object which is imaged (photographed) as an electronic image and the tactile sense at that position correspond to each other.

The tactile sense is a sense of touch on the object, such as texture, shape, pressure (contact strength) distribution, temperature distribution, and friction distribution.

The image information with tactile information that has been generated by the image/tactile information input device 1 is inputted to, for example, an image/tactile display device (not shown). The image/tactile display device reproduces the image of the object and the tactile sense of the object on the basis of the image information with tactile information.

Since the image information with tactile information includes the associating information for associating the image information and the tactile information, the object image and the object tactile sense can be associated with each other accurately and reliably, and so the object image and the tactile sense can accurately be reproduced.

The image information with tactile information produced by the image/tactile information input device 1 may be transmitted from the image/tactile information input device 1 to the image/tactile display device, for example, by radio or wire, or may be inputted via a unloadable recording medium, or, alternatively, both of them are possible.

In other words, the image/tactile information input device 1 may include a communication facility (communication means) capable of performing transmission and reception (communication) of a signal to such as the image/tactile display device by radio or wire, or may be constructed (recording means may be provided) to allow recording (storing) and reproducing (reading) of information (data) to removable recording medium (such as a memory card, an optical disc, a magneto-optical disk, and magnetic disk), alternatively, both of them are possible.

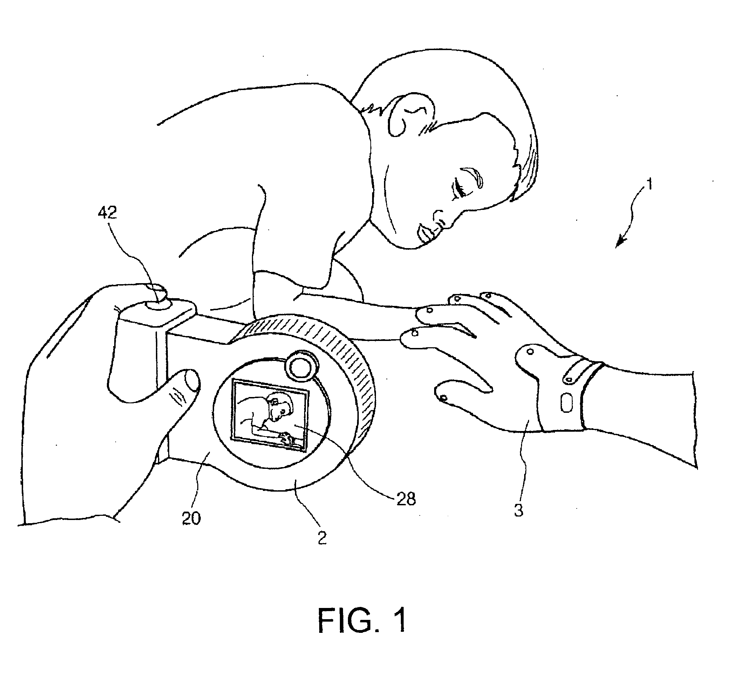

Referring to Fig. 1, the image/tactile information input device 1 includes a camera (digital camera) 2 for imaging (photographing) an object as an electronic image and capturing the image information of the object, and a tactile glove (tactile-information acquisition means) 3 for touching at least one part of the object to capture tactile information that is the sense of touch (sense of touch by hand or fingers). The camera 2 constitutes image-information acquisition means and associating-information production means for generating associating information for associating the image information with the tactile information.

The image/tactile information input device 1, that is, the camera 2 and the tactile glove 3 have radio communication function (radio communication means) capable of transmitting and receiving a signal by radio (radio communication) between the camera 2 and the tactile glove 3.

The communication means is not limited to radio communication but may be a cable communication between the camera 2 and the tactile glove 3.

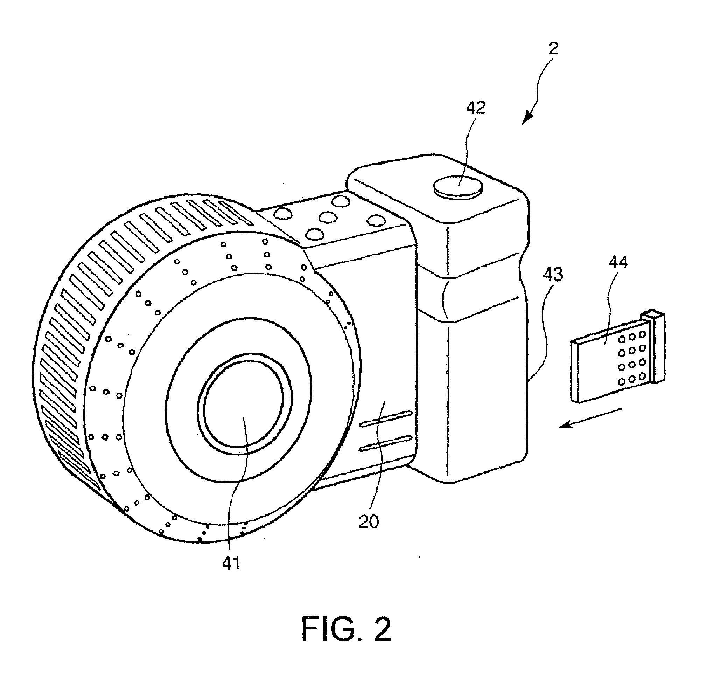

As shown in Figs. 1 and 2, the camera 2 has a body 20, an imaging lens (a group of imaging lenses) 41 on the front of the body 20, a monitor (display means) 28 on the back of the body 20, an imaging switch (release switch) 42 on the top of the body 20, and a memory slot (memory loading section) 43 on the side of the body 20.

An unloadable memory card (a card-shaped recording medium having a memory) 44 is loaded into the memory slot 43. When the memory card 44 is loaded in the memory slot 43, information (data) can be written (stored) to and read out from the memory card 44.

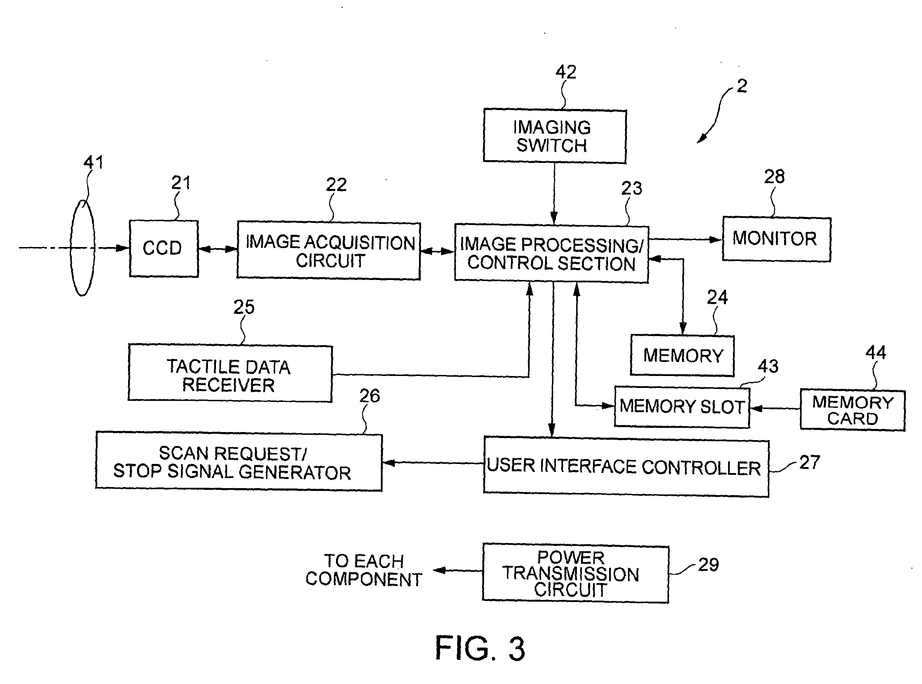

As shown in Fig. 3, the camera 2 includes a CCD (image pickup device) 21, an image acquisition circuit 22, an image processing/control section 23, a memory (such as a ROM (read-only memory), an EEPROM (electrically erasable programmable ROM), a flash memory, and a RAM (random-access memory)) 24, a tactile data receiver 25, a scan request/stop signal generator 26, a user interface controller 27, and a power transmission circuit 29 for supplying power to each component (each circuit).

The image processing/control section 23 has, for example, a microcomputer (CPU), controlling the operation of the entire camera 2 such as exposure operation, auto-exposure, automatic focusing (AF), sequence control in addition to image processing.

The memory 24, the memory slot 43, the memory card 44 and so on constitute recording means for recording image information with tactile information.

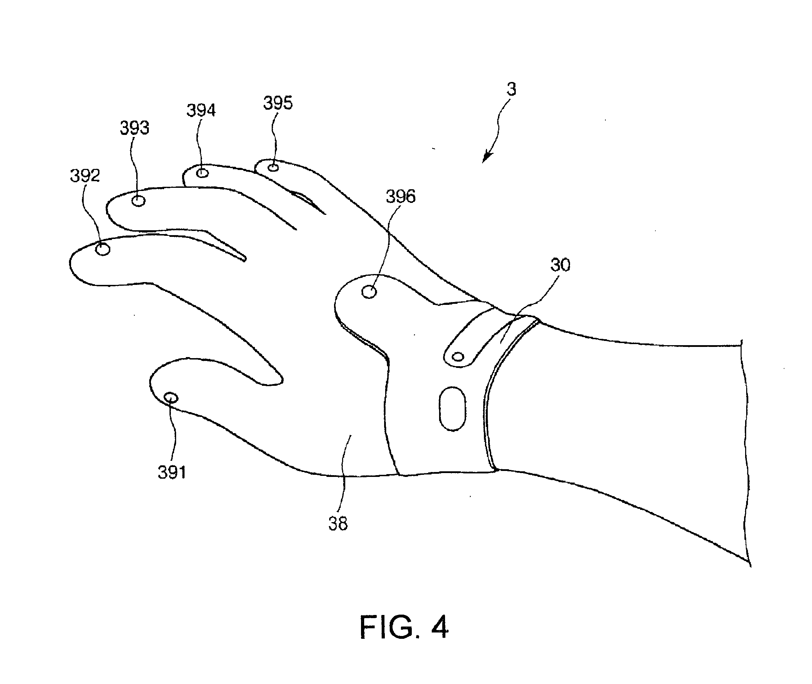

As shown in Fig. 4, the overall tactile glove 3 is shaped in the form of a glove. More specifically, the tactile glove 3 includes a glove 38, as a glove-shaped wearing means for a user (operator) to wear on the hand (from the fingers to the wrist).

The user can easily and reliably put on or off the tactile glove 3 by means of the glove 38.

The tactile glove 3 has a control unit 30 on the part corresponding to the wrist of the glove 38.

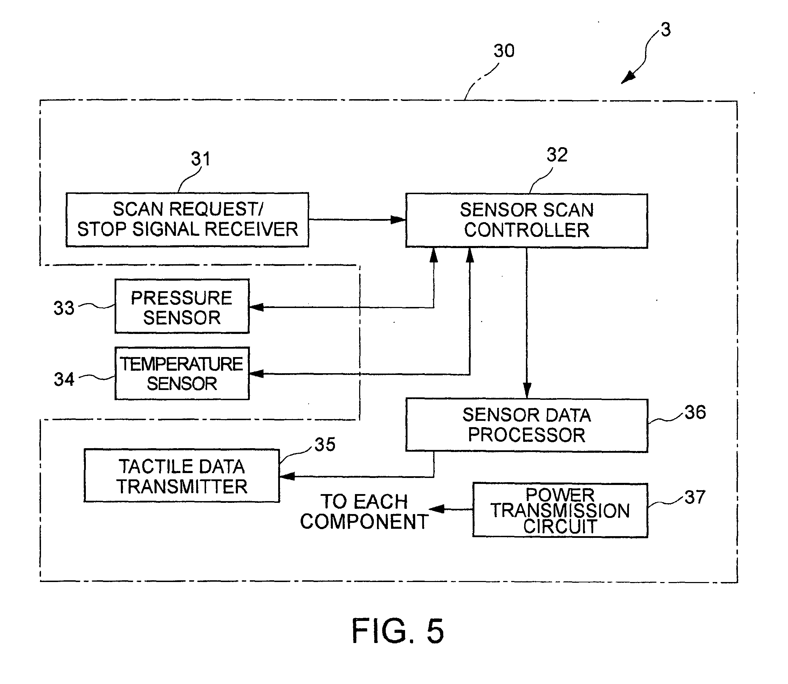

As shown in Fig. 5, the control unit 30 includes a scan request/stop signal receiver 31, a sensor scan controller 32, a tactile data transmitter 35, a sensor data processor 36, and a power transmission circuit 37 for supplying power to each component (each circuit).

With the above-described arrangement of the control unit 30, the fingers (end) of the tactile glove 3 can be made to have relatively little weight (the inertia can be low), so the user can easily perform the action (operation).

The sensor scan controller 32 has, for example, a microcomputer (CPU), controlling the operation of the overall tactile glove 3 in addition to sensor scan processing.

As shown in Fig. 5, the tactile glove 3 includes a plurality of pressure sensors 33 for detecting the pressure when it comes into contact with the object and a plurality of temperature sensors 34 for detecting the temperature when it comes into contact with the object, as sensing means for detecting the tactile sense when it comes into contact with the object. By using the sensor group of pressure sensors 33 (hereinafter, simply referred to as pressure sensors 33) and the sensor group of temperature sensors 34 (hereinafter, simply referred to as temperature sensors 34), pressure information (pressure data) and temperature information (temperature data) are captured as tactile information (tactile data).

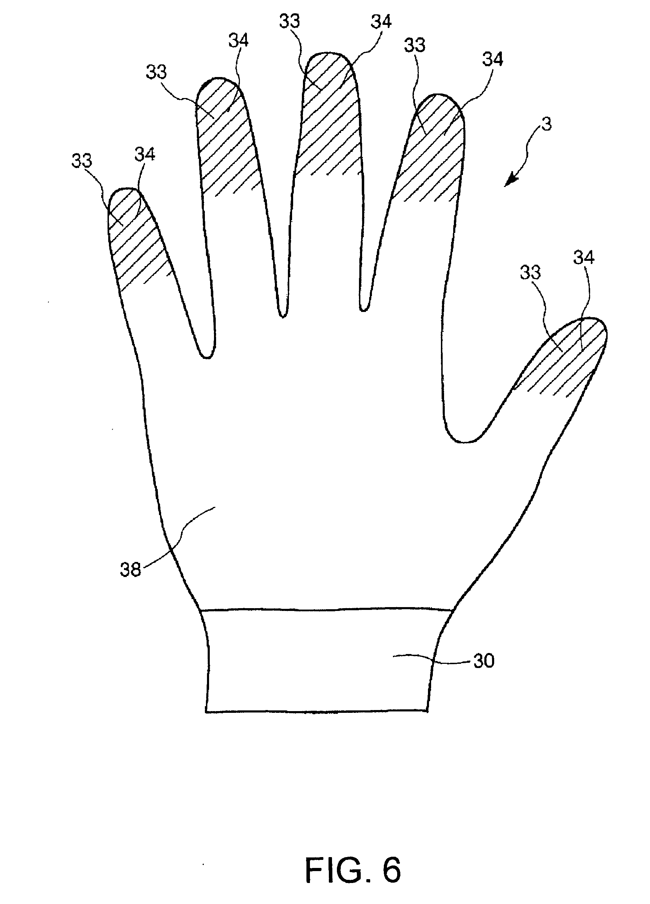

As shown in Fig. 6, the pressure sensors 33 and the temperature sensors 34 are arranged on the palm side of the glove 38, in regions corresponding to the finger cushions (pulp) at the tips of the fingers in this embodiment.

The regions of the pressure sensors 33 and the temperature sensors 34 are not limited to the regions in the drawing, but for example, pressure sensors 33 and temperature sensors 34 may be provided in the front of the finger cushions of each finger of the glove 38 or, may be provided on the overall palm of the glove 38.

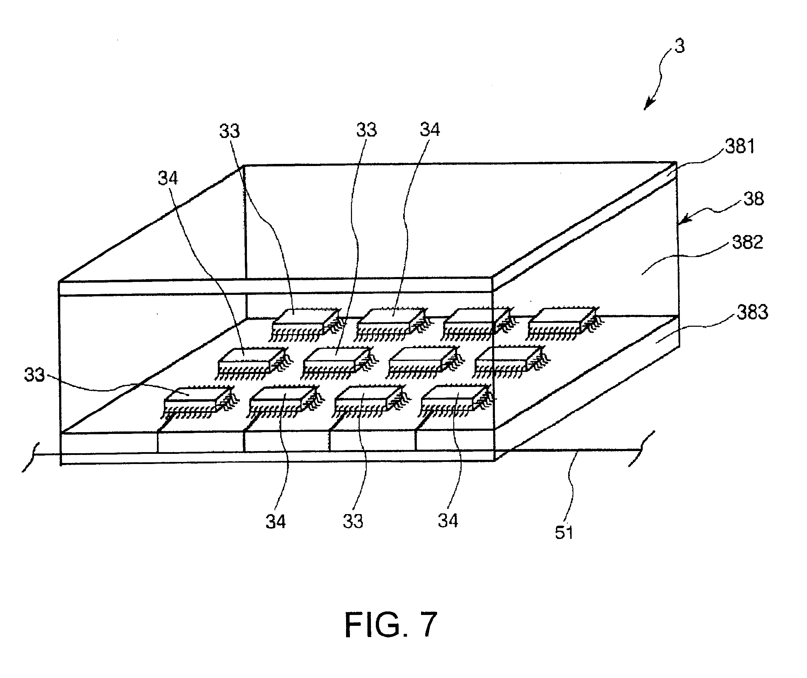

As shown in Fig. 7, the glove 38 of the tactile glove 3, particularly, the regions having the pressure sensors 33 and the temperature sensors 34 may be formed of a lamination layer composed of a resin film 381, a relatively soft polymer gel layer 382, and a relatively hard polymer gel layer 383.

In this arrangement, a surface side, which is to contact the object, is arranged as the outside surface. The resin film 381, the relatively soft polymer gel layer 382, and the relatively hard polymer gel layer 383 are arranged from the outside toward the inside in this order. The pressure sensors 33 and the temperature sensors 34 are mounted in the relatively soft polymer gel layer 382, that is, on the relatively hard polymer gel layer 383.

Each of the pressure sensors 33 and the temperature sensors 34 is connected to the sensor scan controller 32 via a signal line 51.

It is preferable that the number of the pressure sensors 33 and the temperature sensors 34 per unit area (density) is equal to or larger than the number of receptors such as warm spots, cold spots, and touch spots of human skin per unit area (density).

More specifically, it is preferable that the number of the pressure sensors 33 per unit area (density) is equal to or larger than the number of touch spots of human skin per unit area (density). It is also preferable that the number of the temperature sensors 34 per unit area (density) is equal to or larger than the number of warm spots and cold spots of human skin per unit area (density).

Accordingly, a tactile sense quite close to a human sense of touch can be realized to allow proper tactile information to be acquired.

In Fig. 7, the pressure sensors 33 and the temperature sensors 34 are arranged in a matrix. In the present invention, however, the arrangement of the pressure sensors 33 and the temperature sensors 34 is not limited to that.

According to the invention, for example, the temperature sensors 34 may be omitted.

According to the invention, a plurality of friction sensors for detecting friction when touching the object may be arranged on the tactile glove 3 in place of the temperature sensors 34, or in addition to the pressure sensors 33 and the temperature sensors 34, with which friction information (friction data) may be acquired.

According to the invention, the sensors being used are not limited to the pressure sensors, the temperature sensors, and the friction sensors. In other words, the tactile information to be captured is not limited to the pressure information, the temperature information, and the friction information.

As shown in Fig. 4, the back of the glove 38 of the tactile glove 3 has a plurality of position markers for designating positions. Six position markers 391, 392, 393, 394, 395, and 396 are arranged in this embodiment.

The position markers 391, 392, 393, 394, and 395 are arranged at the positions that correspond to the tips of the thumb, the index finger, the middle finger, the ring finger, and the little finger of the glove 38, respectively. The position marker 396 is arranged at the position that corresponds to the center of the back of the hand of the glove 38.

The position markers 391 to 396 have respective patterns and colors capable of identifying (detecting) the respective position markers. By detecting the position markers 391 to 396, the respective positions of each of them can be detected.

Since the relationship (positional relationship) between the respective positions of the position markers 391 to 396, and the respective positions of the pressure sensors 33 and the temperature sensors 34 is known in advance, the respective positions of the pressure sensors 33 and the temperature sensors 34 can be obtained on the basis of the positional relationship and the detected positions of the position markers 391 to 396.

The action (operation) of the image/tactile information input device 1 will then be described.

Here, a case, in which the user (operator) captures (inputs) image information of a baby and tactile information of the hand and arm of the baby as an object using the image/tactile information input device 1, will typically be described.

At first, the user determines the picture composition while viewing the monitor 28 and images (photographs) the object baby (for example, the lying posture of the baby) as an electronic image with the camera 2.

Accordingly, imaging is performed in the CCD 21 and a signal is outputted from the CCD 21. The signal is subjected to particular signal processing and image processing in the image acquisition circuit 22 and the image processing/control section 23, and data of the resulting electronic image, that is, image information (for example, image information of the lying posture of the baby) that is digital data, is stored in the memory 24.

The user then puts on the tactile glove 3 on the hand, and touches the baby on the hand or arm with the tactile glove 3. The user may not only touch but may pat his/her hand on it.

The user, for example, determines the composition while viewing the monitor 28 and images the state in which he/she touches the baby on the hand or arm with the tactile glove 3 (the tactile glove 3 and the hand or arm of the baby) as an electronic image with the camera 2.

In this manner, imaging is performed in the CCD 21 and a signal is outputted from the CCD 21. The signal is subjected to particular signal processing and image processing in the image acquisition circuit 22 and the image processing/control section 23, and data of the imaged electronic image, that is, the image information of the state in which the user touches the baby on the hand or arm with the tactile glove 3 (the tactile glove 3 and the hand or the arm of the baby) is stored in the memory 24.

The tactile glove 3 sequentially detects the pressure and the temperature when the user touches (or pats on) the baby on the hand or arm with the pressure sensors 33 and the temperature sensors 34 by the control of the sensor scan controller 32. In other words, the pressure information and the temperature information are captured. It is possible to determine which sensor of the pressure sensors 33 and the temperature sensors 34 the value (data) came from.

Imaging of the tactile glove 3 and the hand or arm of the baby when the user touches the baby on the hand or arm with the tactile glove 3 is performed when the pressure information and the temperature information are captured.

Data on the pressure and data on the temperature, detected by the pressure sensors 33 and the temperature sensors 34, are processed by the sensor data processor 36, and they are then transmitted from the tactile data transmitter 35 to the camera 2. In other words, the pressure information and the temperature information are transmitted from the tactile data transmitter 35 of the tactile glove 3 to the camera 2.

The pressure information and the temperature information are received by the tactile data receiver 25 of the camera 2, and are stored in the memory 24 via the image processing/control section 23.

The image processing/control section 23 of the camera 2 produces associating information for associating image information of the baby and the pressure information and the temperature information (tactile information) so that the image (electronic image) position of a particular region of the baby and the pressure and the temperature (tactile sense) in that position correspond to each other. Thereby generates image information with tactile information including the image information of the baby, the pressure information and the temperature information, and the associating information.

In this case, at first, the image processing/control section 23 obtains the position of the region of the hand or arm of the baby to capture the pressure information and the temperature information on the basis of the image information on the tactile glove 3 and the hand or arm of the baby when the user touches the baby on the hand or arm with the tactile glove 3, and generates associating information on the basis of the obtained positional information.

The image of the tactile glove 3 and the hand or arm of the baby when the user touches the baby on the hand or arm with the tactile glove 3 includes the images of the position markers 391 to 396. The respective positions of the pressure sensors 33 and the temperature sensors 34 can be obtained by means of the position markers 391 to 396, as described above. Also, it is possible to determine which sensor of the pressure sensors 33 and the temperature sensors 34 the value (data) came from. Thus, the associating information can be produced.

The image processing/control section 23 generates image information with tactile information by composing image information of the baby, pressure information and temperature information, and associating information. (composing the image position of a particular region of the baby and the pressure and the temperature at the position so that they can correspond to each other in data).The image information with tactile information is stored in the memory 24 and the memory card 44.

The image information with tactile information may separately include, for example, image information, pressure information and temperature information (tactile information), and associating information or, alternatively, any two of the image information, the pressure information and the temperature information (tactile information), and the associating information may be combined.

In this embodiment, after the image information has been captured, the tactile information is captured. In the present invention, however, the image information may be captured after the tactile information has been captured.

According to the invention, for capturing the tactile information, the number of times and the way of touching the object with the tactile glove 3 are not particularly limited. For example, it is also possible to touch the object once with the tactile glove 3 and to image it with the camera 2. Alternatively, it is also possible to touch the object a plurality of times with the tactile glove 3 and to image it with the camera 2 each time.

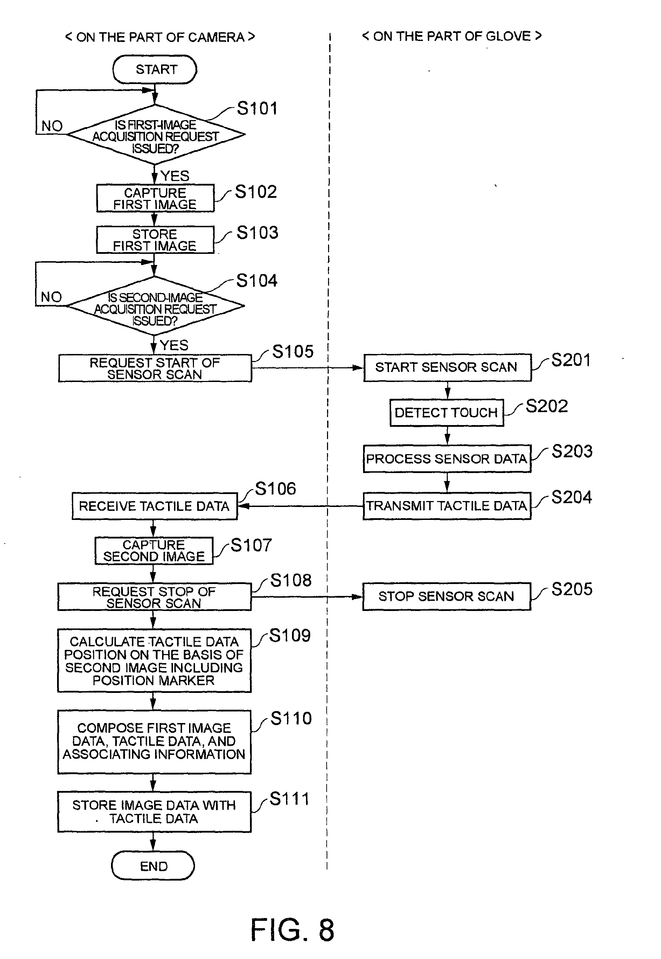

Next, Referring to a flowchart of Fig. 8, the operation of the image/tactile information input device 1 will be specifically described.

The program for implementing the functions described in the flowchart is stored (recorded) in the memory (recording medium) 24 of the camera 2 or a recording medium (a nonvolatile memory or the like such as a ROM, a flash memory, and an EEPROM, not shown here) of the tactile glove 3 in the form of a program code which can be read by the computer. The camera 2 (image processing/control section 23) and the tactile glove 3 (sensor scan controller 32) execute the operation in sequence according to the program code.

The program may be stored only in the camera 2, or only in the tactile glove 3; alternatively, the programs may be stored in both the camera 2 and the tactile glove 3.

Fig. 8 is a flowchart showing an example of the operation of the image/tactile information input device 1 when image information and tactile information are captured. The left side in Fig. 8 shows the processing of camera 2, and the right side in Fig. 8 shows the processing of tactile glove 3.

At first, the user images the object (such as a baby) as an electronic image with the camera 2. In this case, the user determines the picture composition while viewing the electronic image of the object on the monitor 28, for example, and then turns on the imaging switch 42.

As shown in Fig. 8, it is determined in the camera 2 as to whether a first-image acquisition request has been issued (step S101). When it is determined that the first-image acquisition request has been issued, the first image is taken (step S102).

By turning on the imaging switch 42 of the camera 2, the first-image acquisition request is issued.

First image data representing the first image is then stored in the memory 24 (step S103).

The user then images the object and the tactile glove 3 as an electronic image with the camera 2 while touching the object with the tactile glove 3. In this case, the user determines the picture composition while viewing the electronic image of the object and the tactile glove 3 on the monitor 28 and turns on the imaging switch 42.

It is determined in the camera 2 as to whether a second-image acquisition request has been issued (step S104). When it is determined that the second-image acquisition request has been issued, a sensor-scan start request is issued (step S105).

By turning on the imaging switch 42 of the camera 2, the second-image acquisition request is issued.

In the step S105, a scan request/stop signal generator 26 generates a scan request signal via the user interface controller 27, and the scan request signal is transmitted from the scan request/stop signal generator 26 to the tactile glove 3.

The scan request signal is received by the scan request/stop signal receiver 31 of the tactile glove 3 and is inputted to the sensor scan controller 32.

When the scan request signal is inputted, the sensor scan controller 32 starts sensor scanning of the pressure sensors 33 and the temperature sensors 34 (step S201), detects touch (step S202), processes sensor data (step S203), and transmits tactile data (step S204).

In the steps S201 to S204, as described above, the pressure sensors 33 and the temperature sensors 34 sense the pressure and the temperature in sequence by the control of the sensor scan controller 32. The detected data on the detected pressure and the data on the detected temperature are processed by the sensor data processor 36, and tactile data composed of the obtained pressure data and temperature data (hereinafter, simply referred to as tactile data) is transmitted from the tactile data transmitter 35 to the camera 2.

The tactile data is received by the tactile data receiver 25 of the camera 2 (step S106), and is inputted to the image processing/control section 23.

Subsequently, the second image is imaged (step S107).

Thereafter, a sensor-scan stop request is issued (step S108).

In the step S108, a scan stop signal is produced by the scan request/stop signal generator 26 via the user interface controller 27, and the scan stop signal is transmitted from the scan request/stop signal generator 26 to the tactile glove 3.

The scan stop signal is received by the scan request/stop signal receiver 31 of the tactile glove 3 and is inputted to the sensor scan controller 32.

When the scan stop signal is inputted, the sensor scan controller 32 stops the sensor scanning (step S205). Accordingly, the processing of the tactile glove 3 is terminated.

The process of the camera 2 proceeds to step 109 after the step S108, obtains the respective positions of the object that has imported the tactile data on the basis of the second image data including the position markers 391 to 396, and performs tactile-data position calculating processing for producing associating information on the basis of the obtained positional information (step S109).

Subsequently, the first image data, the tactile data, and the associating information are composed (step S110).

Accordingly, the image data with tactile data can be obtained, which is a combination of the first image data, the tactile data, and the associating information.

The image information with tactile information is then stored in the memory 24 and the memory card 44 (step S111).

This program is hereby terminated.

As described above, according to the image/tactile information input device 1, the image/tactile information input method, and the image/tactile information input program, the image information of the object and tactile information can be obtained such that they are associated with each other.

Since the object is imaged as an electronic image and is then captured as image information, the image information can be obtained accurately.

Since tactile information is captured by the touch on the object, the tactile information can be obtained accurately.

When the object image and the object tactile sense are individually reproduced on a particular image/tactile display on the basis of the image information with tactile information that has been produced by the image/tactile information input device 1, since the image information with tactile information includes associating information for associating the image information and the tactile information, the object image and the object tactile sense can be made to correspond to each other accurately and reliably, and so the object image and tactile sense can be reproduced accurately.

The image/tactile information input device, the image/tactile information input method, and the image/tactile information input program according to the invention have been described in accordance with the embodiment in the drawings, it is to be understood that the invention is not limited to that, but the arrangement of the components can be replaced with any other arrangements with similar functions.

According to the embodiment, the tactile-information acquisition means captures a sense of touch (tactile information) from the object by hand or fingers. According to the invention, however, it is not limited to that but a sense of touch (tactile information) from the object by leg or other regions, which touches the object, may be acquired.

According to the embodiment, the object is a baby (living body). However, the object is not limited to the living body but may be everything including material objects.

## Claims

1. An image/tactile information input device **characterized by** comprising:
image-information acquisition means (2) for imaging an object as an electronic image to capture image information of the object;
tactile-information acquisition means (3) for touching at least one part of the object to capture tactile information, which is a sense of touch; and
associating-information production means (23) for producing associating information for associating the image information and the tactile information with each other so that an image position of a particular part of the object and a tactile sense at that position correspond to each other;
wherein an image information with tactile information including the image information, the tactile information, and the associating information is produced.

2. The device according to Claim 1, comprising
means for obtaining positional information on the position of tactile-information acquisition parts (33, 34) of said tactile-information acquisition means (3) on the object when capturing the tactile information; wherein
the associating information is produced on the basis of the obtained positional information.

3. The device according to Claim 2, wherein
the image-information acquisition means (2) is adapted to image the tactile-information acquisition means (3) and the object as an electronic image when capturing the tactile information, and to obtain said positional information on the basis of the image information on the tactile-information acquisition means (3) and the object.

4. The device according to Claim 2 or 3, wherein
the tactile-information acquisition means (3) includes at least one position marker (391-396) designating a particular position of a tactile-information acquisition part (33, 34); wherein
the position of the tactile-information acquisition part of the object is obtained using the position marker.

5. The device according to any one of Claims 1 to 4, wherein the tactile-information acquisition means (3) includes a plurality of pressure sensors (33) for detecting the pressure when the object is touched.

6. The device according to any one of Claims 1 to 5, wherein the tactile-information acquisition means (3) includes a plurality of temperature sensors (34) for detecting the temperature when the object is touched.

7. The device according to any one of Claims 1 to 6, wherein the tactile-information acquisition means (3) includes a glove-shaped wearing means for wearing on hands.

8. The device according to any one of Claims 1 to 7, wherein the tactile information includes one or more of pressure information, temperature information, and friction information.

9. The device according to any one of Claims 1 to 8, adapted to separately capture the image information and the tactile information.

10. The device according to any one of Claims 1 to 9, wherein the image information with tactile information is composed of the image information, the tactile information, and the associating information.

11. The device according to any one of Claims 1 to 9, wherein the image information with tactile information separately includes the image information, the tactile information, and the associating information.

12. The device according to any one of Claims 1 to 11, comprising recording means for recording the image information with tactile information.

13. A method of inputting image/tactile information, **characterized by** comprising the steps of:
imaging an object as an electronic image to capture image information of the object;
touching at least one part of the object to capture tactile information on the sense of touch;
producing associating information for associating the image information and the tactile information with each other so that an image position of a particular part of the object and a tactile sense at the position correspond to each other; and
producing image information with tactile information including the image information, the tactile information, and the associating information.

14. A program of instructions for execution by a machine for performing the method of claim 13 when executed by the machine.
